# FASCICULE DE BREVET EUROPEEN

(11) **EP 1 743 516 B1**
(45) Date de publication et mention de la délivrance du brevet: **05.03.2008**
(21) Numéro de dépôt: 06358011.2
(22) Date de dépôt: 04.07.2006
(51) Int. Cl.: A01D 46/28

(54) **Tête de récolte enjambeuse à auto-centrage pour machine de récolte de petits fruits, et machine équipée d'une telle tête de récolte**
Selbstzentrierende Portalerntekopf für Maschine zum Ernten von kleinen Früchten und Maschine ausgestattet mit einem derartigen Erntekopf
Self centering straddling harvesting head for machine for harvesting small fruits and machine equipped with such a harvesting head.

(30) Priorité: 12.07.2005 FR 0507466
(43) Date de publication de la demande: 17.01.2007
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Marek, Pierre

(56) Documents cités:
- WO-A-20/05043978
- FR-A- 2 532 518
- US-A- 3 473 311
- US-A- 3 827 222
- US-A- 4 236 371

## Description

La présente invention concerne une tête de récolte enjambeuse à auto-centrage pour machine de récolte de petits fruits.

Plus précisément, elle vise une tête de récolte enjambeuse "auto-centrable" pour machine de récolte de baies ou de petits fruits, en particulier pour machine à vendanger, du genre constitué de deux sous-ensembles assemblés rigidement à leur partie supérieure et entre lesquels se trouve ménagé un couloir permettant leur déplacement de chaque côté d'un rang de ceps de vigne ou autres plantes, chacun de ces sous-ensembles comprenant : - un système de détachement des fruits généralement constitué par un dispositif de secouage ; - un dispositif de réception des fruits détachés le plus souvent constitué par un plancher articulé constitué de plaques ou écailles chevauchantes, inclinées et pivotantes ; - un dispositif de transport de la vendange brute recueillie ; - et, généralement, une benne de réception de la récolte ou un dispositif de déchargement de celle-ci.

L'invention concerne également les machines de récolte de baies ou petits fruits, en particulier les machines à vendanger automotrices équipées de cette tête de récolte "auto-centrable".

Les têtes de récolte du genre susmentionné équipent aujourd'hui la quasi totalité des machines à vendanger proposées sur le marché.

En raison du fait que la tête dé récolte se déplace en chevauchant la rangée de ceps ou autres arbustes, il est important que ses deux sous-ensembles restent le plus possible à égale distance desdits ceps, lors de ce déplacement, pour une bonne efficacité des systèmes de détachement des baies; le conducteur de la machine doit donc veiller à ce que la tête de récolte soit toujours bien centrée sur l'alignement de ceps.

Toutefois, il arrive fréquemment, lorsque les vignes sont basses, ou lorsqu'elles ne sont pas palissées, ou pas très bien palissées, que la végétation retombant sur le sol soit très dense et, de ce fait, masque partiellement ou entièrement les pieds de vigne, de sorte que le conducteur manque des repères nécessaires pour corriger le déport de la machine par rapport à l'axe du rang de vigne.

Pour pallier cet inconvénient, la plupart des machines actuelles utilisent un système de guidage dit "pendulaire" actionné par l'effet de la gravité sur la tête de récolte et par l'appui des pieds de vigne sur celle-ci (voir FR-A-2 532 518).

Selon ce système de suspension pendulaire, la tête de récolte est montée sur deux axes horizontaux, à l'avant et à l'arrière. Ces axes d'articulation sont positionnés nettement plus haut que le centre de gravité de la tête de récolte et dans le même plan vertical, afin d'obtenir une réaction symétrique du pendule constitué par celle-ci. Le guidage est réalisé par la réaction de l'appui des pieds de vigne sur la partie basse de la tête de récolte.

Ce système de guidage pendulaire utilisé actuellement par la plupart des constructeurs de machines à vendanger automotrices, présente pourtant des inconvénients importants.

Le problème majeur découlant de ce système résulte du fait que le centrage est produit par la réaction des pieds de vigne sur les rampes inférieures de guidage situées en partie basse de la tête de récolte, généralement entre le dispositif de réception des baies et grappes détachées des ceps de vigne (écailles mobiles ou godets de noria) et le sol, la distance entre les deux rampes parallèles de guidage constituant le couloir mécanique de ladite tête de récolte.

On comprend aisément qu'en raison de la grande inertie de l'ensemble de la tête de récolte qui pendule, la réaction sur les pieds de vigne est parfois violente, surtout à l'entrée d'un rang lorsque le premier pied de vigne s'engage dans le couloir mécanique et supporte à lui seul la réaction de la tête de récolte dont le poids peut aller jusqu'à représenter une masse d'environ trois tonnes.

De plus, un système pendulaire oblige à prévoir un centre de gravité le plus bas possible par rapport à l'axe du pendule, ce qui élimine la possibilité de montage des bennes de réception de la récolte sur l'ensemble qui pendule, ce qui aurait pour effet de rajouter une part inertielle très importante lorsque les bennes se remplissent ; de surcroît, le remplissage pas toujours égal de celles-ci déséquilibrerait le pendule qui décentrerait le couloir mécanique par rapport au rang de vigne.

On conçoit aussi que l'effet pendulaire actionné par la gravité, le soit aussi par des accélérations parasites provoquées par les irrégularités du terrain sur lequel roule la machine, ou par les effets directionnels de changement de trajectoire provoqué par la direction du véhicule porteur. Ces accélérations parasites sont généralement perpendiculaires à l'axe du pendule, ce qui a pour effet très indésirable d'actionner le guidage du couloir mécanique mais pas dans le bon sens et de créer des contre-réactions sur les pieds de vigne pouvant aller jusqu'à la rupture.

Certains constructeurs ont cherché à pallier au problème précédemment exposé en proposant des machines tractées attelées au véhicule tracteur par un timon articulé, ou des machines à vendanger automotrices à châssis articulé.

L'invention a pour objet une tête de récolte et une machine équipée de cette dernière, en particulier une machine à vendanger automotrice permettant un auto-centrage automatique de ladite tête de récolte dans son intégralité fonctionnelle, par rapport à l'alignement de ceps, quelles que soient sa masse et la position de son centre de gravité G.

Selon l'invention, ce but est atteint grâce à une tête de récolte dépendante d'un ou plusieurs moyens capables de lui communiquer, en cours de travail, des mouvements, d'un côté ou de l'autre par rapport au plan vertical médian du porteur enjambeur sur lequel elle est montée, ces moyens étant commandés par au moins un système de pilotage et aptes à centrer au moins la partie basse de ladite tête de récolte par rapport aux plantes du rang.
Selon une autre disposition caractéristique, le ou les moyens aptes à centrer au moins la partie basse de la tête de récolte, comprennent au moins un composant mécanique solidaire de ladite tête de récolte.

Selon une autre disposition caractéristique, les moyens aptes à centrer au moins la partie basse de la tête de récolte comprennent au moins un actionneur électrique, ou hydraulique, ou pneumatique.

Selon un mode d'exécution préféré, les moyens aptes à centrer la tête de récolte sont agencés et disposés de sorte à communiquer à celle-ci, des mouvements perpendiculaires au plan vertical médian du porteur enjambeur, en cours de travail, lorsque ladite tête de récolte est montée sur le porteur enjambeur, c'est-à-dire des mouvements perpendiculaires au sens d'avancement de cette dernière.

Selon un mode d'exécution intéressant, la tête de récolte est assujettie à l'action d'au moins deux actionneurs latéraux permettant d'établir une liaison mécanique entre ladite tête de récolte et des éléments latéraux du châssis porteur enjambeur.

Selon un mode d'exécution préféré, les actionneurs latéraux constituant les moyens assurant les déplacements de centrage de la tête de récolte, sont constitués par des vérins hydrauliques à double tige et à volume de chambre identique.

Selon un autre mode d'exécution avantageux, les moyens assurant les déplacements de centrage de la tête de récolte comprennent un troisième vérin hydraulique à double tige disposé entre les vérins latéraux et installé à la partie supérieure de la tête de récolte, ce troisième vérin ou vérin central ayant, de préférence, un volume de chambre identique à celui desdits vérins hydrauliques latéraux.

Selon un autre mode d'exécution très avantageux, les moyens assurant les déplacements et le centrage de la tête de récolte constituent également les moyens de liaison mécanique de cette dernière avec le bâti du porteur enjambeur.

Selon une autre disposition caractéristique, le système de pilotage des moyens de centrage de la tête de récolte comprend des capteurs de position installés de part et d'autre du couloir central permettant le passage des plantes, en cours de travail, de préférence en partie basse et à l'avant dudit couloir

Selon des modes d'exécution possibles, les capteurs de position sont constitués par des palpeurs mécaniques, ou par des radars à ultra-sons ou à hyper-fréquence, ou par des systèmes optiques.

Grâce à l'invention, lors du déplacement de la machine sur un rang de vigne ou autres plantes, la tête de récolte est automatiquement centrée, dans son intégralité fonctionnelle (système de récolte + bennes de réception de vendange ou dispositif de déchargement de récolte), quelles que soient la masse et la position du centre de gravité de ladite tête de récolte. Ce guidage s'effectue d'un côté ou de l'autre du rang de vigne et indépendamment des roues avant et arrière de la machine.

Le système selon l'invention n'est pas du tout sensible aux accélérations parasites induites par les effets directionnels du véhicule porteur, ni à celles provoquées par les irrégularités du terrain sur lequel roule la machine.

En outre, ce système est parfaitement adapté à l'attelage et au dételage rapides de la tête de récolte, dans le cadre d'une utilisation multifonctionnelle du véhicule porteur.

Dans l'application aux machines à vendanger et plus particulièrement aux machines à vendanger automotrices, l'invention repose sur un concept simple qui est celui de permettre à la tête de récolte, indépendamment de la position du porteur, de suivre, par asservissement de position, le rang de vignoble en se guidant de façon active sur les ceps. Cet asservissement de position de la tête de récolte sur les ceps se fait, de manière très avantageuse, de façon électro-hydraulique.

La mise en oeuvre de la tête de récolte selon l'invention procure de nombreux avantages, notamment dans l'application aux machines à vendanger automotrices. On souligne par exemple, les avantages ci-après :
- Augmentation de la vitesse d'avancement permettant un gain de 1 à 2 km/h par rapport aux techniques actuelles et au moins à qualité équivalente, ce gain représentant une amélioration de 25 % de la productivité ce qui économiquement est très important.
- Absence d'appui de la tête active sur le végétal pour se positionner, ce qui évite l'effeuillage provoqué par les têtes pendulaires, la récolte est donc de meilleure qualité.
- La tête active de récolte n'est jamais à contre temps par rapport à la position des ceps ; l'asservissement de position est proportionnel à la vitesse d'avancement ce qui garantit un positionnement parfait et évite les dégâts, dont l'arrachage de ceps.
- Sur sol très caillouteux, la tête compense les variations du porteur sans avoir l'inertie des têtes pendulaires.
- Facilité d'entrée dans le rang : dans les tournières, le conducteur peut volontairement déplacer la tête du côté qui lui permettra de faciliter cette entrée (gain de temps et protection du premier cep et du palissage).
- Le conducteur connaît en permanence la position de sa tête de récolte, ce qui assure une augmentation du confort et une simplification de la conduite de la machine.

Les buts, caractéristiques et avantages ci-dessus, et d'autres encore, ressortiront mieux de la description qui suit et des dessins annexés dans lesquels :
La figure 1 est une vue de face, à caractère schématique, d'un premier mode d'exécution d'une tête de récolte selon l'invention.
La figure 2 est une vue de face d'un autre agencement possible de cette tête de récolte.
La figure 3 est une vue en plan de la figure 1.
La figure 4 est une représentation schématique du système de guidage automatique illustré aux figures 1 à 3.
La figure 5 est une vue en plan, à caractère schématique, d'un deuxième mode d'exécution de la tête de récolte selon l'invention.
La figure 6 est une représentation schématique du système de centrage automatique illustré à la figure 5.
La figure 7 est une vue en plan, à caractère schématique, illustrant un troisième mode d'exécution de la tête de récolte selon l'invention.
La figure 8 est une vue schématique illustrant la mesure de l'angle de déport de l'axe de symétrie de la tête de récolte par rapport à un pied de vigne.
La figure 9 est une vue de face, à caractères schématique, d'un autre mode d'exécution d'une machine de récolte selon l'invention.

On se reporte auxdits dessins pour décrire des exemples de réalisation avantageux, bien que nullement limitatifs, de la tête de récolte "auto-guidable" selon l'invention et de machines de récolte équipées de celle-ci.

Sur les dessins annexés, les organes communs aux différents modes de réalisation illustrés, sont désignés par des références identiques.

On décrit ci-après une application très intéressante de l'invention à l'équipement des machines de récolte de baies ou autres petits fruits, mais on précise que d'autres applications agricoles du système de guidage décrit ci-après seraient possibles de sorte que, dans ce cas, l'expression "tête de travail" devrait se substituer à l'expression "tête de récolte".

La tête de récolte et la machine équipée de celle-ci sont avantageusement applicables à la récolte de baies ou petits fruits tels que, par exemple, cassis, groseilles, framboises, olives, ... et en particulier à la vendange ou récolte du raisin pour l'élaboration du vin. Pour cette raison, on se réfère, dans la présente description, à une tête de récolte montée sur le châssis porteur enjambeur B d'une machine à vendanger, mais cette illustration d'exemples de réalisation n'a évidemment aucun caractère limitatif.

Les machines de récolte de baies telles que les machines à vendanger comprennent une tête de récolte supportée à demeure par une structure porteuse enjambeuse automotrice, ou agencée pour pouvoir être montée, de manière amovible, sur un porteur enjambeur automoteur.

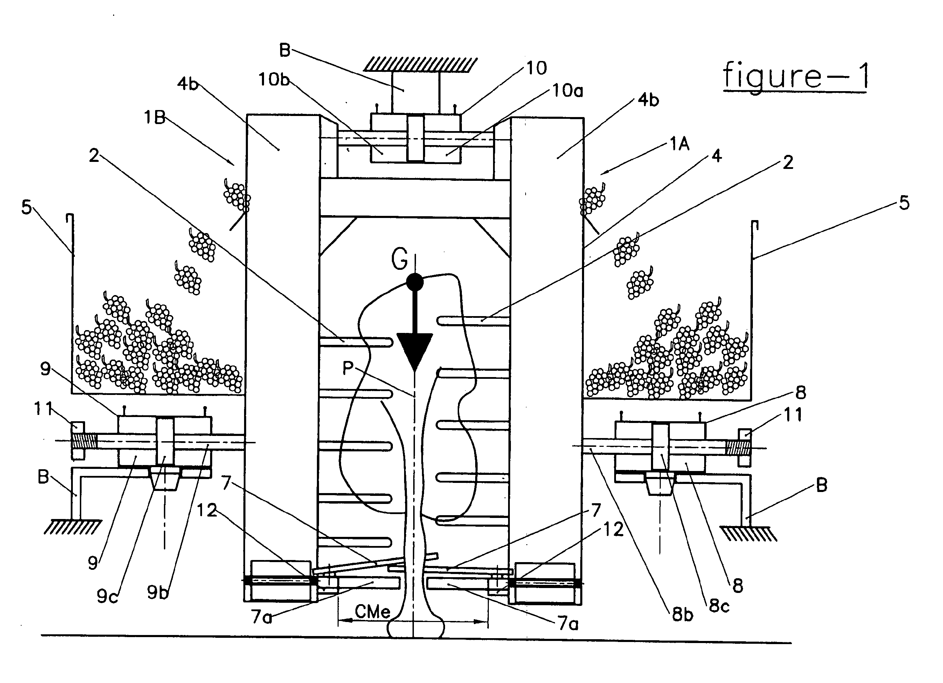

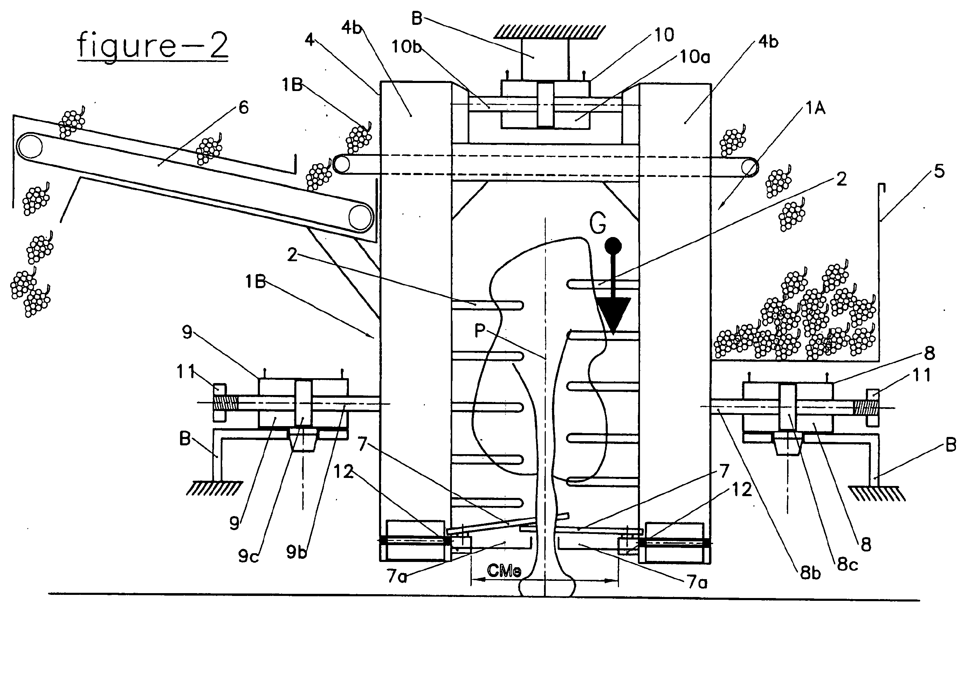

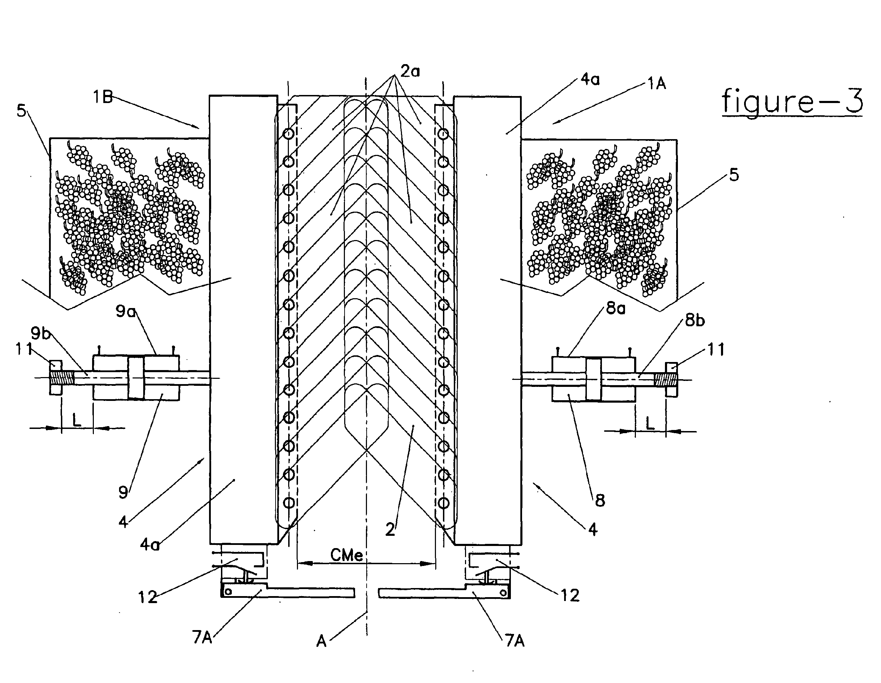

La tête de récolte 1 selon l'invention est du genre constitué, dans son intégralité fonctionnelle, de deux sous-ensembles 1A, 1 B assemblés rigidement à leur partie supérieure et entre lesquels se trouve ménagé un couloir permettant le passage de la rangée de ceps de vigne ou autres arbustes, chevauchée par ladite tête de récolte. Chacun des sous-ensembles 1A, 1 B comprend : - un système de détachement des fruits généralement constitué par un dispositif de secouage 2 ; - un système de réception des fruits détachés, par exemple constitué par un plancher articulé 3 formé de plaques ou écailles chevauchantes inclinées et mobile qui se rejoignent autour des ceps, - un dispositif de transport de la vendange brute recueillie, le plus souvent constitué par un convoyeur 4 comprenant un tronçon horizontal inférieur 4a et un tronçon ascendant 4b acheminant la vendange brute vers la partie supérieure de la tête de récolte, et une benne de réception de vendange 5 ou un dispositif de déchargement latéral 6 de ladite vendange. Par exemple, selon les figures 1 et 3, chaque sous-ensemble de la tête de récolte comprend une benne de réception de vendange 5, alors que suivant la figure 2, l'un (1A) des sous-ensembles comprend un bras de déchargement latéral 6 tandis que le deuxième (1B) sous-ensemble comprend une benne 5 qui peut être une benne-relais du genre décrit dans la Demande de Brevet FR 2 868 663.

Selon une première disposition caractéristique de l'invention, l'ensemble de la tête de récolte est dépendante d'un ou plusieurs moyens capables de lui communiquer, en cours de travail, des mouvements d'un côté ou de l'autre par rapport au plan vertical médian P-P du porteur enjambeur B à l'intérieur duquel elle est installée. Ce dernier peut être d'un type destiné à être attelé à un tracteur ou être incorporé à une machine automotrice.

Les moyens aptes à centrer au moins la partie basse de la tête de récolte 1, comprennent au moins un composant mécanique solidaire de ladite tête de récolte.

Les moyens capables de communiquer des mouvements de centrage à la tête de récolte 1 comprennent au moins un actionneur électrique, ou hydraulique, ou pneumatique, permettant d'établir une liaison mécanique entre le porteur enjambeur B et ladite tête de récolte.

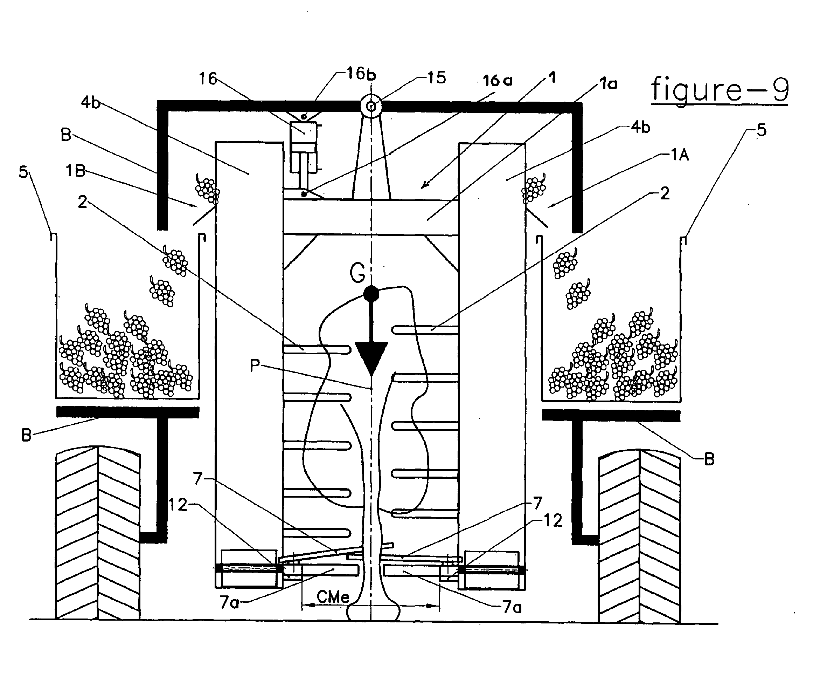

Un mode d'exécution mettant en oeuvre un seul actionneur est illustré à la figure 9 qui montre une tête de récolte 1 suspendue de manière pendulaire, au moyen d'un axe 15, à un élément supérieur du porteur enjambeur B. L'actionneur 16 est, selon l'exemple illustré, constitué par un vérin à double effet fixé par l'intermédiaire de ses extrémités opposées et au moyen d'articulations 16a et 16b, d'une part à un élément supérieur 1 a de la tête de récolte et, d'autre part, audit élément supérieur du porteur enjambeur B

De manière préférée et selon les modes d'exécution illustrés aux figures 1 à 6, les moyens assurant les déplacements de centrage de la tête de récolte sont agencés et disposés de sorte à communiquer à celle-ci des mouvements perpendiculaires au plan vertical médian P-P du porteur enjambeur B.

Suivant ces modes d'exécution et selon une disposition caractéristique très intéressante de l'invention, les moyens assurant les déplacements et le centrage de la tête de récolte constituent également les seuls moyens de liaison mécanique de cette dernière avec le bâti porteur B du porteur enjambeur, sans aucune autre interface mécanique.

Selon une disposition caractéristique, ces moyens comprennent au moins deux actionneurs latéraux 8 et 9, respectivement, destinés à établir une liaison mécanique entre chaque côté de la tête de récolte 1 et des supports équipant symétriquement les parties verticales de l'ossature du porteur enjambeur B.

Selon un mode d'exécution avantageux, les moyens assurant les déplacements de centrage de la tête de récolte 1 comprennent au moins deux vérins latéraux, 8 et 9, respectivement, par l'intermédiaire desquels cette dernière est reliée ou peut être reliée au porteur enjambeur B.

De préférence, ces vérins latéraux de centrage 8 et 9 sont constitués par des vérins hydrauliques à double tige et à volume de chambre identique.

De manière avantageuse, les moyens assurant les déplacements de centrage de la tête de récolte comprennent un troisième vérin hydraulique de préférence constitué par un vérin à double tige 10 disposé entre les vérins latéraux 8 et 9 et installé à la partie supérieure de la tête de récolte, ce troisième vérin ou vérin central ayant un volume de chambre identique à celui desdits vérins hydrauliques latéraux.

Comme cela ressort de ce qui précède, les trois vérins 8, 9 et 10 remplissent deux fonctions :
- ils assurent le déplacement de la tête de récolte de la machine à vendanger, de droite à gauche et vice-versa par rapport à l'axe du rang de vigne ;
- ils portent la masse intégrale de la tête de récolte, sans aucune autre interface mécanique.

Lorsque la tête de récolte est installée à demeure sur un porteur enjambeur automoteur, les vérins sont solidaires dudit porteur, tandis que lorsque ladite tête de récolte est destinée à être montée de façon amovible sur un porteur enjambeur polyvalent, lesdits vérins et ledit porteur sont agencés de manière complémentaire pour permettre un attelage et un dételage aisés et rapides de cette dernière.

De manière préférée, le corps 8a, 9a, 10a des vérins 8, 9 et 10 respectivement est fixé à demeure, ou agencé pour pouvoir être fixé, de façon amovible, sur le bâti B du porteur enjambeur tandis que la double tige 8b, 9b des vérins latéraux est rigidement fixée, par l'intermédiaire de l'une de ses extrémités, à un élément latéral du châssis de la tête de récolte et que la double tige 10b du vérin central 10 est rigidement fixée, par l'intermédiaire de ses deux extrémités, à un élément supérieur dudit châssis.

Les vérins latéraux droit et gauche 8 et 9 sont pourvus d'un système de réglage de la course de déplacement de leur piston 8c, 9c, respectivement, et, par conséquent de la course de déplacement L de la tête de récolte, à droite ou à gauche. Ce système de réglage peut être constitué par un écrou 11 se vissant sur l'extrémité externe filetée 8b' ou 9b' de la double tige 8b ou 9b. Ce réglage permet d'optimiser au millimètre près le déplacement gauche et droit de la tête de récolte à l'intérieur du porteur enjambeur B afin de permettre le plus grand déplacement possible sans altérer la facilité d'attelage et de dételage de la tête de récolte. La valeur du couloir dynamique CDy de cette dernière est donc égale à la valeur du couloir mécanique CMe de celle-ci plus deux fois la valeur de la course réglée (L), soit (CDy)=(CMe)+2(L).

La tête de récolte selon l'invention est dotée d'un système de pilotage capable de commander le centrage de celle-ci par rapport aux pieds de vigne ou autres plantes d'un rang de pieds de vigne ou autres plantes.

Selon un mode d'exécution intéressant, ce système de pilotage comprend des capteurs de position 7A, ou 7B, ou 7C, installés de part et d'autre du couloir permettant le passage, en cours de vendange, des pieds de vigne et du palissage, ces capteurs de position étant, de préférence, positionnés à l'entrée et en partie basse dudit couloir.

Les capteurs de position 7A, 7B, 7C, par exemple installés à l'entrée du couloir mécanique CMe de la tête de récolte, de part et d'autre de l'axe A de symétrie de celle-ci peuvent être constitués par des palpeurs mécaniques, ou par des radars à ultrasons ou à hyper fréquence, ou par des systèmes optiques.

Dans le cas de capteurs de position constitués par des radars à ultrasons ou à hyper-fréquence, ou par des systèmes optiques, la tête de récolte comprend une interface électrique ou électronique configurée de manière connue en soi, pour commander les distributeurs, et/ou les distributeurs proportionnels, et/ou les servodistributeurs, et/ou les servovalves utilisés pour assurer le fonctionnement des actionneurs.

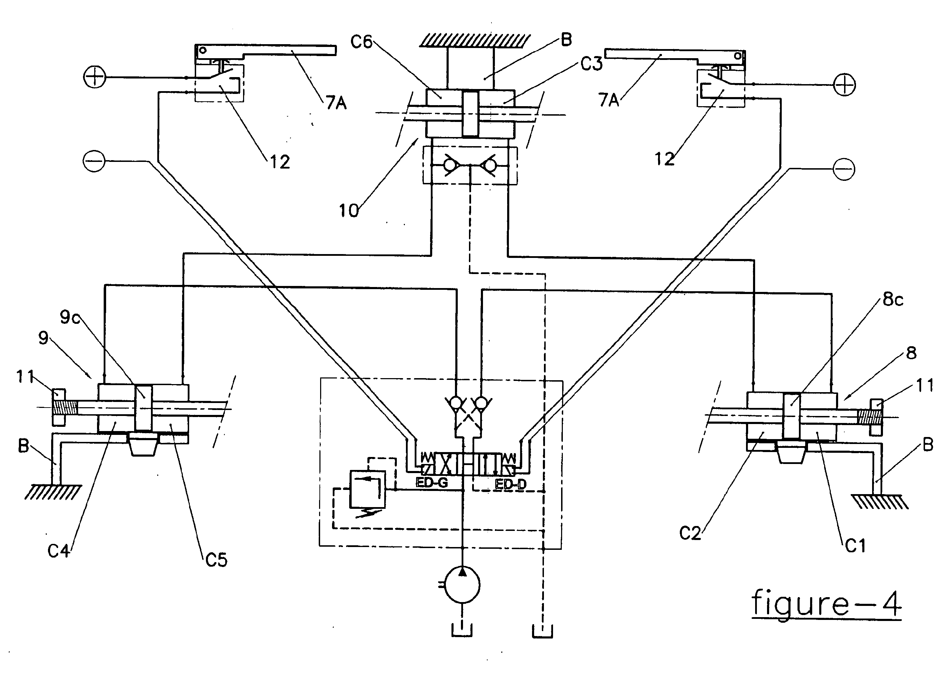

Sur les figures 1 à 4, les capteurs de position sont constitués par des palpeurs souples 7A qui lorsqu'ils entrent au contact des pieds de vigne actionnent des éléments de contact électrique ou électronique 12 qui, à leur tour, commandent un ou plusieurs électro-distributeurs, ou électro-distributeurs proportionnels, ou servo-distributeurs, ou servo-valves, lesquels alimentent les chambres des vérins latéraux 8 et 9. Suivant le circuit hydraulique illustré à la figure 4, les éléments de contact électrique ou électronique 12 commandent un ou plusieurs distributeurs hydrauliques ED-G ou ED-D, selon que le déport est vers la gauche ou vers la droite. L'électro-distributeur hydraulique "droit" ED-D communique avec la chambre externe C1 du vérin hydraulique droit 8 dont la chambre interne C2 communique avec l'une C3 des chambres du vérin central 10, tandis que l'électro-distributeur hydraulique "gauche" ED-G communique avec la chambre externe C4 du vérin hydraulique gauche 9 dont la chambre interne C5 communique avec la seconde chambre C6 dudit vérin central 10.

Par exemple, en se reportant à la figure 4, si la machine à vendanger se déporte vers la droite par rapport à l'axe A du rang de vigne, le palpeur souple gauche 7A touche le pied de vigne et actionne l'élément de contact électrique ou électronique gauche 12 qui lui est associé, lequel, à son tour pilote l'une des deux bobines de l'électro-distributeur hydraulique gauche ED-G.

Ce pilotage permet d'envoyer de l'huile dans la chambre externe C4 du vérin hydraulique gauche 9, qui se remplit le temps de la durée du contact. Le remplissage de la chambre C4 a pour conséquence de refouler la même quantité d'huile de la chambre C5 de ce même vérin. L'huile refoulée de la chambre C5 du vérin gauche 9 est introduite dans la chambre C6 du vérin central 10. Le remplissage de cette dernière a pour effet de refouler la même quantité d'huile de l'autre chambre C3 dudit vérin central. L'huile refoulée de la chambre C3 du vérin central 10 est introduite dans la chambre interne C2 du vérin droit 8, ce qui a pour effet de refouler la même quantité d'huile de la chambre externe C1 de ce même vérin. La poussée égale qui s'exerce sur la surface gauche des pistons 8c, 9c des vérins latéraux 8 et 9 a pour effet d'induire un déplacement de droite vers la gauche de la tête de récolte, strictement identique en tous points, à l'avant ou à l'arrière du couloir mécanique CMe ou de bas en haut, de l'ensemble de ladite tête de récolte.

Le fait que les trois vérins hydrauliques 8, 9, 10 se déplacent toujours de la même course a pour effet de ne pas solliciter en effort la structure du châssis de la tête de récolte. En effet, on comprend aisément que si les vérins hydrauliques poussaient la structure du châssis enjambeur de gauche à droite ou de droite à gauche à l'aide d'un seul vérin, l'excédant de poussée serait systématiquement absorbé par la structure du châssis ce qui engendrerait des déformations importantes du couloir mécanique CMe. Ces déformations ne seraient pas acceptables pour garantir une bonne étanchéité de récolte des raisins par les écailles du plancher articulé de réception des fruits détachés.

La tête de récolte selon l'invention comporte également, de préférence, deux capteurs de position qui détectent si la course de guidage L est consommée afin d'en avertir le conducteur de la machine qui pourra alors effectuer une correction de la trajectoire du véhicule porteur à l'aide du volant de direction de ce dernier.

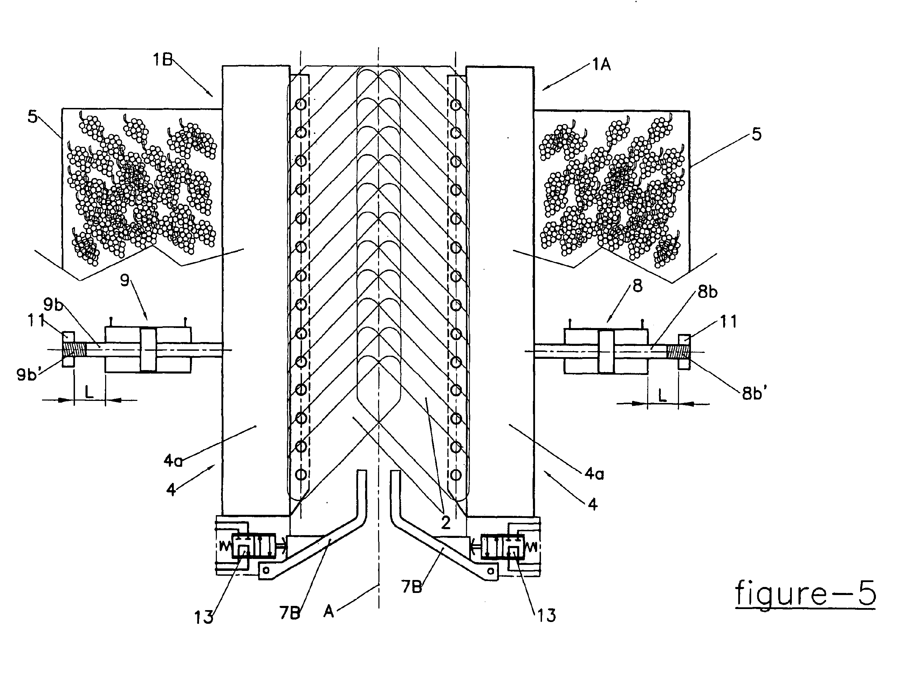

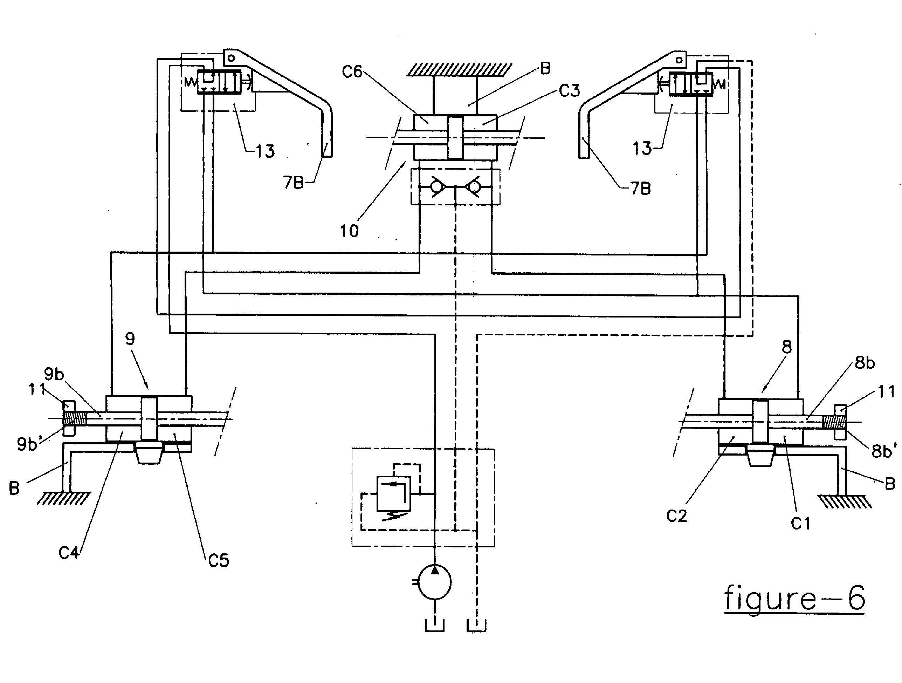

On a représenté, aux figures 5 et 6, un troisième mode d'exécution qui diffère de celui qui vient d'être décrit, essentiellement par une construction suivant laquelle les capteurs de position disposés à l'entrée du couloir mécanique CMe de la tête de récolte, sont constitués par des palpeurs rigides 7B, chacun de ces capteurs actionnant directement un distributeur hydraulique 13 installé à proximité dudit capteur. Sur cette figure, le vérin central 10 n'est pas représenté.

Selon ce mode d'exécution, la description du fonctionnement de l'ensemble des vérins 8, 9, 10 est sensiblement identique à celle de l'exemple précédemment décrit.

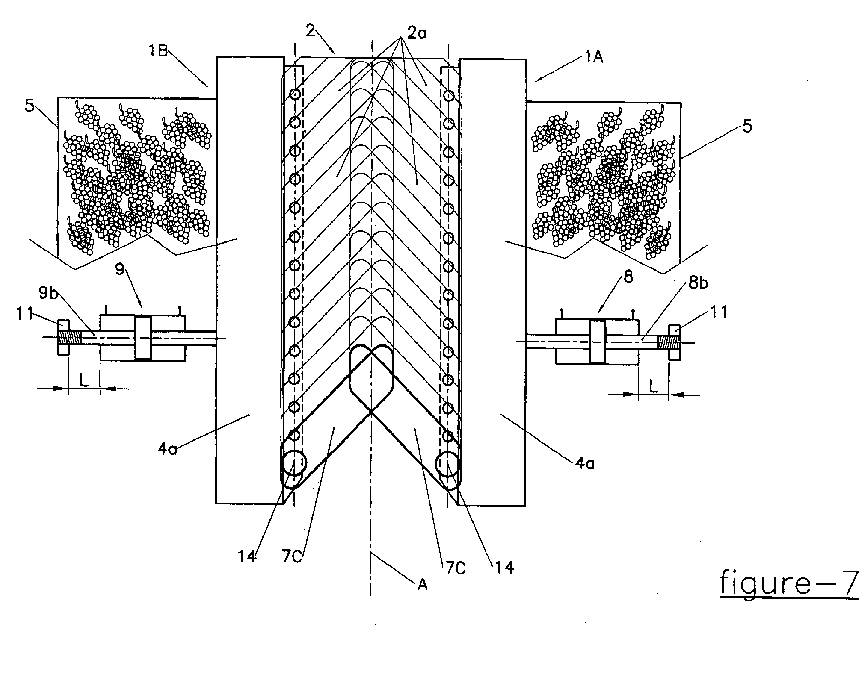

La figure 7 illustre un quatrième mode d'exécution selon lequel les capteurs de position disposés de part et d'autre du couloir mécanique CMe et à l'avant de celui-ci, sont constitués par la première écaille pivotante 7C de chaque rangée d'écailles chevauchantes 2a droite et gauche constituant le plancher mobile 2 de réception des baies détachées.

Ces palpeurs-écailles agissent sur un contact électrique actionnant un électro distributeur hydraulique ou actionnent directement un électro-distributeur hydraulique, comme exposé précédemment.

En considérant que les écailles pivotantes 2a constituant le plancher mobile 2 de réception de la vendange, sont implantées symétriquement par couple, de part et d'autre du couloir mécanique CMe, les capteurs de position pourraient être constitués par un ou plusieurs couples d'écailles disposés à une ou des distances quelconques de l'entrée dudit couloir.

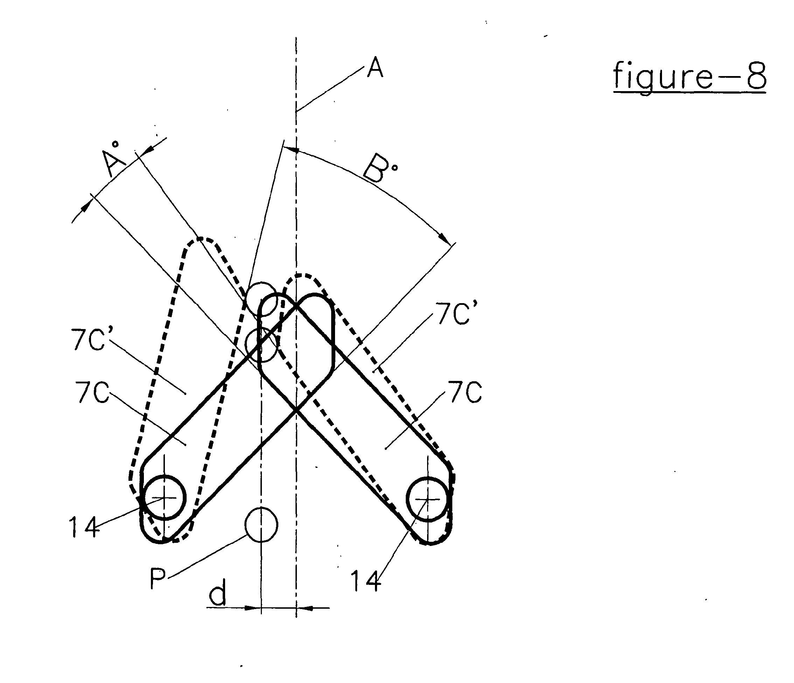

En outre, selon ce mode d'exécution, des capteurs angulaires 14 peuvent être disposés à l'articulation des palpeurs-écailles 7C, de sorte à permettre de mesurer les angles cinématiques A° et B° induit par le déport d de chaque pied de vigne P par rapport à l'axe de symétrie A de la tête de récolte, comme représenté schématiquement à la figure 8.

La mesure directe des angles A° et B° permet de définir avec précision la cote de déport d par rapport à l'axe de symétrie A de la tête de récolte, soit : d = f (A°, B°).

La description du fonctionnement de l'ensemble des vérins hydrauliques de guidage 8, 9, 10 est également, dans ce cas, identique à celle du premier mode d'exécution précédemment décrit, à la seule exception que l'action de correction est proportionnelle au défaut d'alignement de l'axe de symétrie A de la tête de récolte et du pied de vigne P selon la distance d qui est parfaitement connue parce que mesurée.

## Revendications

1. Tête de récolte destinée à être installée sur un porteur roulant et configurée pour enjamber un rang de plantes fruitières, en cours de travail, pour réaliser la vendange ou la récolte de baies ou petits fruits, tels que, par exemple, raisin, cassis, groseilles, framboises, olives, cette tête de récolte étant du genre constitué de deux sous-ensembles (1A, 1B) assemblés rigidement à leur partie supérieure et entre lesquels se trouve ménagé un couloir permettant leur déplacement de chaque côté d'un rang de ceps de vigne ou autres plantes, chacun de ces sous-ensembles (1A, 1B) comprenant principalement : - un système de détachement des fruits généralement constitué par un dispositif de secouage (2) ; - un dispositif de réception des fruits détachés et de transport de la vendange brute recueillie (4) ; - et, généralement, une benne de réception de la récolte (5) ou un dispositif de déchargement de celle-ci (6), **caractérisée en ce que** ladite tête de récolte (1) est, dans son intégralité fonctionnelle, dépendante d'un ou plusieurs moyens (8, 9, 16) capables de lui communiquer, en cours de travail, des mouvements, d'un côté ou de l'autre par rapport au plan vertical médian (P-P) du porteur enjambeur (B) sur lequel elle est montée, ces moyens étant commandés par au moins un système de pilotage (7A, 7B, 7C) et aptes à centrer au moins la partie basse de ladite tête de récolte par rapport aux plantes du rang.

2. Tête de récolte selon la revendication 1, **caractérisée en ce que** le ou les moyens aptes à centrer au moins la partie basse de la tête de récolte (1) comprennent au moins un composant mécanique (8b, 9b) solidaire de ladite tête de récolte.

3. Tête de récolte selon l'une des revendications 1 ou 2, **caractérisée en ce que** les moyens aptes à centrer au moins la partie basse de la tête de récolte (1) comprennent au moins un actionneur (8, 9, 16) électrique, ou hydraulique, ou pneumatique.

4. Tête de récolte suivant l'une quelconque des revendications 1 à 3, **caractérisée en ce que** les moyens (8, 9) aptes à centrer la tête de récolte (1) sont agencés et disposés de sorte à communiquer à celle-ci des mouvements perpendiculaires au plan vertical médian (P-P) du porteur enjambeur (B), en cours de travail, lorsque ladite tête de récolte (1) est montée sur le porteur enjambeur (B).

5. Tête de récolte selon la revendication 4, **caractérisée en ce qu**'elle comprend au moins deux actionneurs latéraux (8, 9) destinés à établir une liaison entre ladite tête de récolte (1) et le porteur enjambeur (B).

6. Tête de récolte suivant la revendication 5, **caractérisée en ce que** les actionneurs latéraux de centrage sont constitués par des vérins hydrauliques (8, 9) à double tige et à volume de chambre identique.

7. Tête de récolte selon l'une des revendications 4 ou 6, **caractérisée en ce que** les moyens aptes à centrer la tête de récolte (1) comprennent un troisième vérin hydraulique (10) à double tige disposé entre les vérins latéraux (8, 9) et installé à la partie supérieure de la tête de récolte.

8. Tête de récolte selon la revendication 7, **caractérisée en ce que** ledit troisième vérin ou vérin central (10) a un volume de chambre identique à celui desdits vérins hydrauliques latéraux (8, 9).

9. Tête de récolte selon l'une quelconque des revendications 4 à 8, **caractérisée en ce que** les moyens aptes à centrer la tête de récolte (1) constituent également les moyens de liaison mécanique de cette dernière avec le bâti du porteur enjambeur (B).

10. Tête de récolte selon la revendication 6, **caractérisée en ce que** le corps (8a, 9a) des vérins latéraux (8, 9) est fixé ou agencé pour pouvoir être fixé sur le bâti (B) du porteur, tandis que la double tige (8b, 9b) desdits vérins latéraux est rigidement fixée par l'intermédiaire de l'une de ses extrémités, à un élément latéral du châssis de la tête de récolte (1).

11. Tête de récolte suivant la revendication 7, **caractérisée en ce que** le corps (10a) du vérin central (10) est fixé ou agencé pour pouvoir être fixé à la partie supérieure du bâti (B) du porteur, tandis que la double tige (10b) dudit vérin central est rigidement fixée, par l'intermédiaire de ses deux extrémités, à un élément supérieur du châssis de la tête de récolte (1).

12. Tête de récolte suivant l'une quelconque des revendications 6 à 11, **caractérisée en ce que** les vérins latéraux sont munis d'un système de réglage (11) de leur course de déplacement (L).

13. Tête de récolte selon l'une quelconque des revendications 1 à 12, **caractérisée en ce que** le système de pilotage des moyens de centrage (8,9, 10) de ladite tête de récolte comprend des capteurs de position (7A, ou 78, ou 7C) installés de part et d'autre du couloir permettant le passage des plantes, en cours de travail, ces capteurs de position étant, de préférence, installés à l'entrée et en partie basse dudit couloir.

14. Tête de récolte selon la revendication 13, **caractérisée en ce que** les capteurs de position sont constitués par des palpeurs mécaniques, ou par des radars à ultra-sons ou à hyper-fréquence, ou par des systèmes optiques.

15. Tête de récolte selon l'une des revendications 13 ou 14, **caractérisée en ce que** les capteurs de position sont constitués par des palpeurs souples (7A) actionnant des contacts électriques ou électroniques (12).

16. Tête de récolte selon la revendication 15, **caractérisée en ce que** les contacts électriques ou électroniques (12) commandent un ou plusieurs électrodistributeurs, ou électrodistributeurs proportionnels, ou servodistributeurs, ou servovalves, lesquels alimentent les chambres des vérins latéraux (8, 9).

17. Tête de récolte suivant l'une des revendications 13 ou 14, **caractérisée en ce que** les capteurs de position sont constitués par des palpeurs rigides ou semi-rigides (7B) actionnant directement un ou plusieurs distributeurs hydrauliques (13) disposés à l'entrée et/ou de part et d'autre du couloir mécanique (CMe) de ladite tête de récolte, lesquels alimentent les chambres des vérins latéraux (8, 9).

18. Tête de récolte selon l'une des revendications 13 ou 14, suivant laquelle chaque système de réception de la récolte (2) est constitué par une succession ou rang d'écailles pivotantes (2a), **caractérisée en ce que** les capteurs de position sont constitués par un ou plusieurs couples d'écailles et, par exemple, par la première écaille (7C) de chaque succession ou rang d'écailles.

19. Tête de récolte suivant l'une quelconque des revendications 6 à 16, **caractérisée en ce que qu**'elle comporte un distributeur hydraulique (ED-D, ED-G) communiquant avec les chambres des vérins latéraux (8, 9) et permettant d'envoyer de l'huile dans l'une des chambres de l'un ou l'autre desdits vérins latéraux.

20. Tête de récolte suivant la revendication 18, **caractérisée en ce que** des capteurs angulaires (14) sont positionnés à l'articulation des palpeurs-écailles (7C), de sorte à permettre la mesure de l'angle cinématique induit par le déport du pied des plantes.

21. Machine de récolte de baies ou petits fruits, en particulier machine à vendanger automotrice, **caractérisée en ce qu**'elle comporte une tête de récolte à auto-centrage selon l'une quelconque des revendications 1 à 20.

## Claims

1. A harvesting head adapted for being arranged on a running support and configured for striding over a row of fruit plants, in service, for grape harvesting or for harvesting berries or small fruit, such as, for example, grape, blackcurrant, redcurrant, raspberries, olives, such harvesting head being of the type made of two subsets (1A, 1B) rigidly assembled at their upper part and between which there is a channel arranged for allowing them to move on each side of a row of vinestocks or other plants, each one of said subsets (1A, 1B) primarily comprising : - a system for releasing fruit generally made of a shaking device, (2) ; - a device for receiving released fruit and transporting the collected gross wine harvest (4) ; - and generally a tipper (5) for receiving the crop or a device (6) for unloading the latter, **characterized in that** said harvesting head (1) is, in its whole function, dependent on one or more means (8, 9, 16) able to impart to it, in operation, movements, on either side relative to the median vertical plane (P-P) of the striding support (B) on which it is mounted, said means being controlled by at least one steering system (7A, 7B, 7C) and able to centre at least the lower part of said harvesting head relative to the row plants.

2. A harvesting head according to claim 1, **characterized in that** the one or more means able to centre at least the lower part of the harvesting head (1) comprise(s) at least one mechanical component (8b, 9b) integral with said harvesting head.

3. A harvesting head according to any of claims 1 or 2, **characterized in that** means able to centre at least the lower part of the harvesting head (1) comprise at least one electrical, or hydraulic, or pneumatic actuator (8, 9, 16).

4. A harvesting head according to any of claims 1 to 3, **characterized in that** means (8, 9) able to centre the harvesting head (1) are arranged and positioned so as to impart to the latter movements perpendicular to the median vertical plane (P-P) of the striding support (B), in operation, when said harvesting head (1) is mounted on the striding support (B).

5. A harvesting head according to claim 4, **characterized in that** it comprises at least two side actuators (8, 9) adapted to establish one connexion between said harvesting head (1) and the striding support (B).

6. A harvesting head according to claim 5, **characterized in that** the centring side actuators are made of hydraulic jacks (8, 9) with a double stem and an identical chamber volume.

7. A harvesting head according to any of claims 4 or 6, **characterized in that** means able to centre the harvesting head (1) comprise a third hydraulic jack (10) with double stem positioned between the side jacks (8, 9) and arranged in the upper part of the harvesting head.

8. A harvesting head according to claim 7, **characterized in that** said third or central jack (10) has a chamber volume identical to that of said side hydraulic jacks (8, 9).

9. A harvesting head according to any of claims 4 to 8, **characterized in that** means able to centre the harvesting head (1) also constitute means for mechanically connecting the latter with the frame of the striding support (B).

10. A harvesting head according to claim 6, **characterized in that** the body (8a, 9a) of the side jacks (8, 9) is fixed or arranged for being able to be fixed to the frame (B) of the support, while the double stem (8b, 9b) of said side jacks is rigidly fixed through one of the ends thereof to a side member of the frame of the harvesting head (1).

11. A harvesting head according to claim 7, **characterized in that** the body (10a) of the central jack (10) is fixed or arranged to be able to be fixed to the upper part of the frame (B) of the support, while the double stem (10b) of said central jack is rigidly fixed, through the ends thereof, to an upper member of the frame of the harvesting head (1).

12. A harvesting head according to any of claims 6 to 11, **characterized in that** the side jacks are provided with a system (11) for adjusting their movement stroke (L).

13. A harvesting head according to any of claims 1 to 12, **characterized in that** the steering system for the centring means (8, 9, 10) of said harvesting head comprises position sensors (7A, or 7B, or 7C) arranged on both sides of the channel allowing for plants to pass, in operation, said position sensors being preferably arranged at the inlet and in the lower part of said channel.

14. A harvesting head according to claim 13, **characterized in that** the position sensors are made of mechanical sensors or ultrasound or hyper-frequency radars, or optical systems.

15. A harvesting head according to one of claims 13 or 14, **characterized in that** the position sensors are made of flexible sensors (7A) for actuating electrical or electronic contacts (12).

16. A harvesting head according to claim 15, **characterized in that** the electrical or electronic contacts (12) control one or more electrodistributors, or proportional electrodistributors, or servodistributors, or servovalves, which supply the chambers of the side jacks (8, 9).

17. A harvesting head according to any of claims 13 or 14, **characterized in that** the position sensors are made of rigid or semi-rigid sensors (7B) directly actuating one or more hydraulic distributors (13) arranged at the inlet and/or on both sides of the mechanical channel (CMe) of said harvesting head, which supply the chambers of the side jacks (8, 9).

18. A harvesting head according to any of claims 13 or 14, wherein each harvest receiving system (2) is made of a sequence or row of rotating scales (2a), **characterized in that** the position sensors are made of one or more scale pairs and, for example, by the first scale (7C) of each sequence or row of scales.

19. A harvesting head according to any of claims 6 to 16, **characterized in that** it comprises a hydraulic distributor (ED-D, ED-G) communicating with the chambers of the side jacks (8, 9) and allowing to send oil into one of the chambers of either of said side jacks.

20. A harvesting head according to claim 18, **characterized in that** angular sensors (14) are positioned at the hinge of the scale sensors (7C), so as to allow for the kinematical angle induced by the offset of the plant foot to be measured.

21. A machine for harvesting berries or small fruit, more particularly an automotive grape harvesting machine, **characterized in that** it comprises an auto-centring harvesting head according to any of claims 1 to 20.

## Patentansprüche

1. Erntekopf, dazu bestimmt, auf einem rollenden Träger montiert zu werden und konfiguriert, um eine Obstpflanzenreihe während des Arbeitsvorgangs zu überspannen, für die Weinernte oder für die Ernte von Beeren oder kleinen Früchten, wie z.B. Trauben, schwarzen und roten Johannesbeeren, Himbeeren, Oliven, dieser Emtekopf vom Typ bestehend aus zwei Unter-Strukturen (1A, 1B), die in ihrem oberen Bereich starr zusammengefügt sind und zwischen denen ein Durchgang entsteht, der ihre Fortbewegung auf jeder Seite einer Rebenreihe oder anderer ermöglicht, jede der Unter-Strukturen (1A, 1B) hauptsächlich umfassend: - ein System zum Abtrennen der Früchte, im Allgemeinen aus einer Schüttelvorrichtung (2) gebildet; - eine Vorrichtung zur Aufnahme der abgetrennten Früchte und zum Transport der gesammelten Rohernte (4) ; - und im Allgemeinen eine Wanne zur Aufnahme der Ernte (5) oder eine Vorrichtung zum Entladen der Ernte (6), **dadurch gekennzeichnet, dass** der besagte Erntekopf (1), in seiner funktionalen Gesamtheit, von einem oder mehreren Mitteln (8, 9, 16) abhängt, die in der Lage sind, ihm während des Arbeitsvorgangs Bewegungen auf der einen oder der anderen Seite mitzuteilen, im Hinblick auf den medianen vertikalen Plan (P-P) des Grätschenträgers (B), auf dem er montiert ist, wobei diese Mittel durch mindestens ein Steuersystem (7A, 7B, 7C) gesteuert werden und fähig sind, mindestens den unteren Teil des besagten Erntekopfes im Hinblick auf die Pflanzen der Reihe zu zentrieren.

2. Erntekopf nach Anspruch 1, **dadurch gekennzeichnet, dass** das bzw. die Mittel, die fähig sind, mindestens den unteren Teil des Erntekopfes (1) zu zentrieren, mindestens eine mechanische Komponente (8b, 9b) umfassen, die mit dem besagten Erntekopf fest verbunden ist.

3. Erntekopf nach einem der Ansprüche 1 oder 2, **dadurch gekennzeichnet, dass** die Mittel, die fähig sind, mindestens den unteren Teil des Erntekopfes (1) zu zentrieren, mindestens einen elektrischen, hydraulischen oder pneumatischen Antrieb (8,9,16) umfassen.

4. Erntekopf, nach einem der Ansprüche 1 bis 3, **dadurch gekennzeichnet, dass** die Mittel (8, 9), die fähig sind, den Erntekopf (1) zu zentrieren, in der Weise angeordnet und eingebaut sind, dass sie diesem perpendikulare Bewegungen auf der medianen vertikalen Ebene (P-P) des Grätschenträgers (B), während des Arbeitsvorgangs, mitteilen können, wenn der besagte Erntekopf (1) auf dem Grätschenträger (B) montiert ist.

5. Erntekopf nach Anspruch 4, **dadurch gekennzeichnet, dass** er mindestens zwei laterale Antriebsmittel umfasst (8,9), dazu bestimmt, eine Verbindung zwischen dem besagten Erntekopf (1) und dem Grätschenträger (B) herzustellen.

6. Erntekopf nach Anspruch 5, **dadurch gekennzeichnet, dass** die lateralen zentrierenden Antriebsmittel aus Hydraulikhebern (8,9) mit einem Doppelstab und einem identischen Kammervolumen bestehen.

7. Erntekopf nach einem der Ansprüche 4 oder 6, **dadurch gekennzeichnet, dass** die Mittel, die fähig sind, den Erntekopf zu zentrieren (1), einen dritten Hydraulikheber mit Doppelstab umfassen (10), der zwischen den lateralen Zylindern (8,9) angeordnet und am oberen Teil des Erntekopfes installiert ist.

8. Erntekopf nach Anspruch 7, **dadurch gekennzeichnet, dass** der besagte dritte Zylinder oder zentrale Zylinder (10) ein Kammervolumen hat, identisch mit demjenigen der besagten lateralen Hydraulikheber (8,9).

9. Erntekopf nach einem der Ansprüche 4 bis 8, **dadurch gekennzeichnet, dass** die Mittel, die fähig sind, den Erntekopf zu zentrieren (1), ebenfalls die Mittel zur mechanischen Verbindung des Letzteren mit dem Rahmen des Grätschenträger (B) bilden.

10. Erntekopf nach Anspruch 6, **dadurch gekennzeichnet, dass** der Körper (8a, 9a) der lateralen Zylinder(8,9) fest ist oder so konzipiert ist, dass er auf dem Rahmen (B) des Trägers befestigt werden kann, während der Doppelstab (8b, 9b) der besagten lateralen Zylinder starr über eines seiner äusseren Enden an einem Seitenelement des Rahmen des Erntekopfes (1) befestigt ist.

11. Erntekopf nach Anspruch 7, **dadurch gekennzeichnet, dass** der Körper (10a) des zentralen Zylinders (10) so befestigt oder angeordnet ist, dass er auf dem oberen Teil des Rahmens (B) des Trägers befestigt werden kann, während der Doppelstab (10b) des besagten zentralen Zylinders starr über seine äusseren Enden an einem oberen Element des Rahmens des Erntekopfes (1) befestigt ist.

12. Erntekopf nach einem der Ansprüche 6 bis 11, **dadurch gekennzeichnet, dass** die lateralen Zylinder mit einem Steuersystem (11) ihrer Fortbewegung (L) ausgerüstet sind.

13. Erntekopf nach einem der Ansprüche 1 bis 12, **dadurch gekennzeichnet, dass** das Steuersystem der Zentrierungsmittel (8, 9, 10) des besagten Erntekopfes Positionsfühler umfasst (7A, oder 7B, oder 7C), die auf beiden Seiten des Durchgangs installiert sind, um das Passieren der Pflanzen während des Arbeitsvorgangs zu erlauben, wobei diese Positionsfühler vorzugsweise am Eingang und im unteren Bereich des besagten Durchgangs installiert sind.

14. Erntekopf nach Anspruch 13, **dadurch gekennzeichnet, dass** die Positionstaster aus mechanischen Abtastern oder aus Radaren mit Ultraschall oder Hyperfrequenz, oder aus optischen Systemen gebildet werden.

15. Erntekopf nach einem der Ansprüche 13 oder 14, **dadurch gekennzeichnet, dass** die Positionsfühler aus weichen Tastern (7A) bestehen, die elektrische oder elektronische Kontakte betätigen.

16. Erntekopf nach Anspruch 15, **dadurch gekennzeichnet, dass** die elektrischen oder elektronischen Kontakte (12) einen oder mehrere Elektroverteiler steuern, oder proportionale Elektroverteiler, oder Servoverteiler, oder Servoventile, welche die Kammern der lateralen Zylinder versorgen (8, 9).

17. Erntekopf nach einem der Ansprüche 13 oder 14, **dadurch gekennzeichnet, dass** die Positionstaster aus starren oder halb starren Tastern (7B) bestehen, die einen oder mehrere hydraulische Verteiler betätigen (13), angeordnet am Eingang und/oder auf beiden Seiten des mechanischen Durchgangs (CMe) des besagten Erntekopfes, welche die Kammern der lateralen Zylinder versorgen (8,9).

18. Erntekopf nach einem der Ansprüche 13 oder 14, nach welchen jedes System für die Aufnahme der Ernte (2) durch eine Abfolge oder durch eine Reihe sich drehender Schuppen 2a) gebildet wird, **dadurch gekennzeichnet, dass** die Positionsfühler aus einem oder mehreren schuppenförmigen Paaren gebildet werden und, zum Beispiel, durch die erste Schuppe (7C) jeder Abfolge oder Reihe von Schuppen.

19. Erntekopf nach einem der Ansprüche 6 bis 16, **dadurch gekennzeichnet, dass** er einen hydraulischen Verteiler besitzt (ED-D), ED-G), der mit den Kammern der lateralen Zylinder (8,9) kommuniziert und der es ermöglicht, Öl in eine der Kammern des einen oder anderen lateralen Zylinders zu leiten.

20. Erntekopf nach Anspruch 18, **dadurch gekennzeichnet, dass** Winkelsensoren (14) an der Gelenkstelle der Schuppen positioniert sind, um den kinematischen Winkel messen zu können, der durch die nach aussen stehenden Pflanze entsteht.

21. Erntemaschine für Beeren oder kleine Früchte, insbesondere Maschine für die automatisierte Weinernte, **dadurch gekennzeichnet, dass** er einen sich selbst zentrierenden Erntekopf, nach einem der der Ansprüche 1 bis 20, besitzt.
